# EUROPÄISCHE PATENTSCHRIFT

(11) **EP 3 959 962 B1**
(45) Veröffentlichungstag und Bekanntmachung des Hinweises auf die Patenterteilung: **02.04.2025**
(21) Anmeldenummer: 21189001.7
(22) Anmeldetag: 02.08.2021
(51) Int. Cl.: A01F 7/06, A01D 41/127, A01F 12/40, A01F 12/58

(54) **MÄHDRESCHER MIT RESTGUTVERTEILER**
COMBINE HARVESTER WITH RESIDUAL GRAIN DISTRIBUTOR
MOISSONNEUSE-BATTEUSE POURVUE DE DISTRIBUTEUR DE PRODUIT RÉSIDUEL

(30) Priorität: 01.09.2020 DE 102020122842
(43) Veröffentlichungstag der Anmeldung: 02.03.2022
(73) Patentinhaber: CLAAS Selbstfahrende Erntemaschinen GmbH, 33428 Harsewinkel (DE)
(72) Erfinder: Topmöller, Philipp, 33442 Herzebrock-Clarholz (DE); Brand, Andreas, 33428 Marienfeld (DE); Beulke, Christian, 37589 Echte (DE); Elpmann, Manuel, 33154 Salzkotten (DE); Bußmann, Jens, 49179 Ostercappeln (DE)
(74) Vertreter: CLAAS Gruppe

(56) Entgegenhaltungen:
- EP-A1- 1 350 424
- EP-A1- 2 364 587
- EP-A1- 3 714 675
- US-A1- 2016 044 869

## Beschreibung

Die vorliegende Erfindung betrifft einen Mähdrescher, und insbesondere das Problem der gleichmäßigen Verteilung der Verteilung des ausgedroschenen Restguts auf dem Feld durch den Mähdrescher.

Bekannte Restgutverteiler umfassen z.B. einen um eine horizontale Achse rotierenden Rotor oder ein Gebläse zum Beschleunigen des Restguts entgegen der Fahrtrichtung und eine Anordnung von Leitblechen zum Auffächern des beschleunigten Restgutstroms quer zur Fahrtrichtung des Mähdreschers, oder Paare von um eine vertikale Achse rotierende Tellern oder Radialgebläsen, die aufgegebenes Restgut in radialer Richtung fortschleudern. In beiden Fällen variiert die Wurfweite und infolge dessen auch die Breite des Streifens, auf dem das Restgut ausgebracht wird, in Abhängigkeit von Art und Feuchtegehalt des Restguts, und es kann zu einer stark ungleichmäßigen Verteilung des Restguts auf dem Feld kommen, wenn der dieser Streifen von der Arbeitsbreite des Mähdreschers abweicht.

Ein anderer bekannter Ansatz ist die Verwendung eines Pendelverteilers, der einen relativ eng gebündelten Restgutstrom abgibt, diesen aber durch Pendeln entlang einer Schlangenlinie ablegt. Auch hier stellt sich das Problem, dass eine je nach Art und Feuchtegehalt veränderliche Wurfweite die Amplitude der Schlangenlinie variieren lässt.

In der EP 3 714 675 A1, welche zum Stand der Technik nach Artikel 54 (3) EPÜ gehört, ist ein Mähdrescher beschrieben, bei dem die Ist-Verteilung des Restgutstroms auf zwei Auswurfeinrichtungen erfasst wird und ein Gutleitelement am Auslass eines Abscheiderotors verstellt wird, um die Ist-Verteilung einer Soll-Verteilung anzunähern. Sensoren zur Erfassung des Restgutstroms können an verschiedenen Stellen vor den Auswurfeinrichtungen vorgesehen, doch ist keiner dieser Sensoren in der Lage, den auf eine der Auswurfeinrichtungen entfallenden Teil des Gutstroms exakt zu erfassen.

US 2016/044869 A1 offenbart einen Mähdrescher mit einem Rotor, einer nachgelagerten Streuvorrichtung und einer dazwischen angeordneten Verteileinheit mit verstellbaren Leitblechen zur Steuerung des Gutflusses hin zur Streuvorrichtung. Über die Breite der Streuvorrichtung sind Gutflusssensoren angebracht, deren Signale an eine Steuervorrichtung übermittelt werden.

Eine Aufgabe der vorliegenden Erfindung ist, einen Mähdrescher mit einem Abscheider zum Scheiden eines Erntegutstroms in einen Gutanteil und einen Restgutstrom, einem Verteiler zum Auswerfen des Restgutstroms aus dem Mähdrescher und einem zwischen Abscheider und Verteiler angeordneten Gutleitelement zu schaffen, mit dem eine gewünschte Verteilung des Restgutstroms exakt realisierbar ist.

Die Aufgabe wird gelöst durch einen Mähdrescher mit
einem Abscheider zum Scheiden eines Erntegutstroms in einen Gutanteil und einen Restgutstrom,
einem in einer Breitenrichtung ausgedehnten Verteiler zum Auswerfen des Restgutstroms aus dem Mähdrescher, wobei eine quer zur Breitenrichtung verlaufende Grenze einen ersten Bereich des Verteilers, der von einem ersten Teil des Restgutstroms durchlaufen wird, und einen zweiten Bereich des Verteilers definiert, der von einem zweiten Teil des Restgutstroms durchlaufen wird
einem an einem Auslass des Abscheiders angeordneten Gutleitelement, das zwischen Stellungen, die jeweils unterschiedliche Verteilungen des in den Verteiler eintretenden Restgutstroms in der Breitenrichtung bewirken, verstellbar ist,
in der Breitenrichtung verteilt angeordneten Sensoren, von denen jeder zum Erfassen der Stärke eines in der Nachbarschaft des Sensors passierenden Anteils des Restgutstroms und zum Liefern eines für die Stärke des Anteils repräsentativen Ausgangssignals ausgelegt ist, wobei eine erste Gruppe der Sensoren im ersten Bereich des Verteilers und eine zweite Gruppe der Sensoren im zweiten Bereich angeordnet ist und wenigstens die erste Gruppe mehrere Sensoren umfasst, und
einer Steuereinheit zum Erzeugen eines zur Stärke des Anteils des Restgutstroms proportionalen Signals aus jedem Ausgangssignal eines Sensors, zum Addieren der proportionalen Signale der Sensoren wenigstens der ersten Gruppe, um zur Stärke des ersten und des zweiten Teils des Restgutstroms proportionale Signale zu erhalten, zum Vergleichen des Verhältnisses der zum ersten und zweiten Teil proportionalen Signale mit einem Sollverhältnis und zum Verstellen des Gutleitelements im Falle einer Abweichung zwischen dem Verhältnis der zum ersten und zweiten Teil proportionalen Signale und dem Sollverhältnis.

Dem Fachmann wird klar sein, dass nicht jegliche, beliebig kleine Abweichung zu einer Verstellung führen muss, und dass insbesondere Abweichungen, die kleiner sind, als der Messgenauigkeit der Sensoren entspricht oder die unter einer willkürlich definierten Signifikanzschwelle liegen, ignoriert werden können und sollten.

Indem wenigstens die erste Gruppe (vorzugsweise auch die zweite) mehrere Sensoren umfasst, ist es möglich, die Sensoren dicht genug anzuordnen, um einer eventuell ungleichmäßigen Verteilung des Restguts über die Breite des ersten (und ggf. des zweiten) Bereichs Rechnung tragen zu können. Die Ausgangssignale der Sensoren sind zwar insofern repräsentativ für die Stärke des in ihrer Nachbarschaft passierenden Anteils des Restgutstroms, als dass es einen eindeutigen Zusammenhang zwischen Ausgangssignal und Stärke gibt, doch muss dieser nicht von vornherein linear sein. Wenn er es nicht ist, gewährleistet jedoch die Eindeutigkeit, dass jedem Wert des Ausgangssignals ein zur Stärke des Stroms tatsächlich proportionaler Signalwert zugeordnet werden kann, so dass, wenn die proportionalen Signalwerte der Sensoren der ersten (oder zweiten) Gruppe addiert werden, das Ergebnis proportional zum auf den ersten (oder zweiten) Bereich entfallenden Teil des Restgutstroms ist, und folglich durch Angleichen des Verhältnisses dieser Ergebnisse an einen Sollwert eine gewünschte Verteilung des Restgutstroms auf die Bereiche des Verteilers realisierbar ist.

Wenn so zu verschiedenen Zeiten verschiedene Bereiche des Häckselwerks bevorzugt mit Restgut versorgt werden, kann bereits in Höhe des Häckselwerks eine Auffächerung des Restguts quer zur Fahrtrichtung des Mähdreschers erreicht werden. Das Restgut braucht daher stromabwärts vom Häckselwerk nicht mehr so stark in seitlicher Richtung abgelenkt zu werden, so dass der Einfluss von Art und Feuchtegrad des Restguts auf dessen Verteilung auf dem Feld verringert ist. Sensoren zum Erfassen des Restgutstroms sind an einem Einlass des Häckselwerks gezeigt. Wie allerdings die Steuerung des Gutleitelements anhand dieser Sensoren erfolgen soll, ist nicht beschrieben.

Die Grenze zwischen dem ersten und zweiten Bereich des Verteilers ist typischerweise eine rein gedankliche Grenze, der keine körperlichen Merkmale des Verteilers entsprechen müssen. Die Grenze kann mittig durch den Verteiler verlaufen und ihn in zwei gleich große Teile teilen; da der Abscheider jedoch im allgemeinen nicht symmetrisch in Bezug auf den Verteiler angeordnet ist und auch das Gutleitelement die Verteilung des Restgutstroms asymmetrisch beeinflusst, ist dies nicht zwingend.

Vorzugsweise ist jeder Sensor an ein in den Weg des Restgutstroms eingreifendes auslenkbares Element gekoppelt, und das Ausgangssignal des Sensors ist repräsentativ für eine Auslenkung des Elements unter dem Einfluss des Restgutstroms.

Als Sensor kommt dann insbesondere ein Drehwinkelgeber oder ein Drehpotentiometer in Betracht.

Jedem Sensor sollte ferner eine Rückstellfeder zum Beaufschlagen des auslenkbaren Elements in eine in den Restgutstrom eingreifende Ruhestellung zugeordnet sein.

Die Rückstellfeder erlaubt es, den Zusammenhang zwischen Stärke des Restgutstroms am Ort des Sensors und Auslenkung des auslenkbaren Elements in unterschiedlicher Weise zu optimieren. So kann etwa die Länge eines Hebelarms, über den die Rückstellfeder an das auslenkbare Element gekoppelt ist, veränderbar sein, um die globale Empfindlichkeit des Sensors einzustellen. Zu demselben Zweck kann Übersetzung eines das auslenkbare Element mit dem Sensor koppelnden Getriebes verstellbar sein.

Durch Variieren der Position eines festen Endes der Rückstellfeder sind verschiedene Parameter beeinflussbar. Indem das Ende in Längsrichtung der Feder verstellt wird, kann eine Ruhestellung des auslenkbaren Elements und damit insbesondere dessen Empfindlichkeit für schwache Restgutströme variiert werden; je steiler das auslenkbare Element relativ zum Restgutstrom orientiert ist, um so stärker wird es von einem Strom gegebener Stärke ausgelenkt. Durch Verstellen quer zur Längsrichtung der Feder kann das Sättigungsverhalten bei starker Auslenkung beeinflusst werden.

Die Kraft, die der Restgutstrom auf das auslenkbare Element ausübt, schwankt ständig, da die Teilchen des Restgutstroms, die Druck auf das Element ausüben, sich an diesem vorbeibewegen. Um unnötige, eventuell verschleißträchtige Zitterbewegungen des Sensors zu vermeiden, sollte das auslenkbare Element mit dem Sensor über ein schwingungsdämpfendes Element verbunden sein.

Um eine Beeinflussung der Verteilung des Restgutstroms in der Breitenrichtung durch die auslenkbaren Elemente zu minimieren, sollte der Abstand zwischen zwei benachbarten Elementen ein Mehrfaches der Breite der Elemente betragen.

Die die Sensoren sind vorzugsweise in einer Bodenplatte des Verteilers angeordnet sind, da sich dort die Teilchen des Restgutstroms infolge ihres Eigengewichts sammeln und gut zu erfassen sind.

Der Verteiler kann ein Häckselwerk umfassen. Die Sensoren sind dann vorzugsweise stromabwärts vom Häckselwerk angeordnet, da die vom Häckselwerk zerkleinerten Partikel ein gleichmäßigeres, an zufälligen Schwankungen ärmeres Ausgangssignal ergeben als die groben Partikel stromaufwärts vom Häckselwerk.

Vorzugsweise sind die Sensoren an einem Gehäuseabschnitt des Häckselwerks angeordnet, der zusammen mit einem Häckslerrotor einen auslassseitigen Zwickel des Häckselwerks definiert. Die Gefahr, dass hängenbleibende Restgutpartikel die Bewegung des verstellbaren Elements behindern und dadurch das Ausgangssignal verfälschen, ist hier gering, da der Druck der vom Häcklserrotor nachgeschobenen Partikel ein Hängenbleiben verhindert.

Die Zahl der Sensoren ist vorzugsweise gerade, so dass auf jede Gruppe gleich viele Sensoren entfallen können.

Vorzugsweise sind die Sensoren der ersten Gruppe bezüglich der Grenze spiegelbildlich zu den Sensoren der zweiten Gruppe angeordnet, wobei eine Symmetrieebene zwischen den Gruppen die Grenze zwischen erstem und zweitem Bereich bilden kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Mähdrescher in einer teilweise aufgeschnittenen Seitenansicht;
- Fig. 2: einen Übergangsbereich zwischen einem Abscheider und einem Verteiler des Mähdreschers aus Fig. 1 in perspektivischer Ansicht;
- Fig. 3: den Übergangsbereich in einer Ansicht entlang einer Drehachse des Abscheiders;
- Fig. 4: eine alternative Ausgestaltung eines Leitelements
- Fig. 5: ein Häckselwerk mit daran verteilten auslenkbaren Elementen;
- Fig. 6: eine Seitenansicht eines auslenkbaren Elements und eines zugeordneten Sensors.

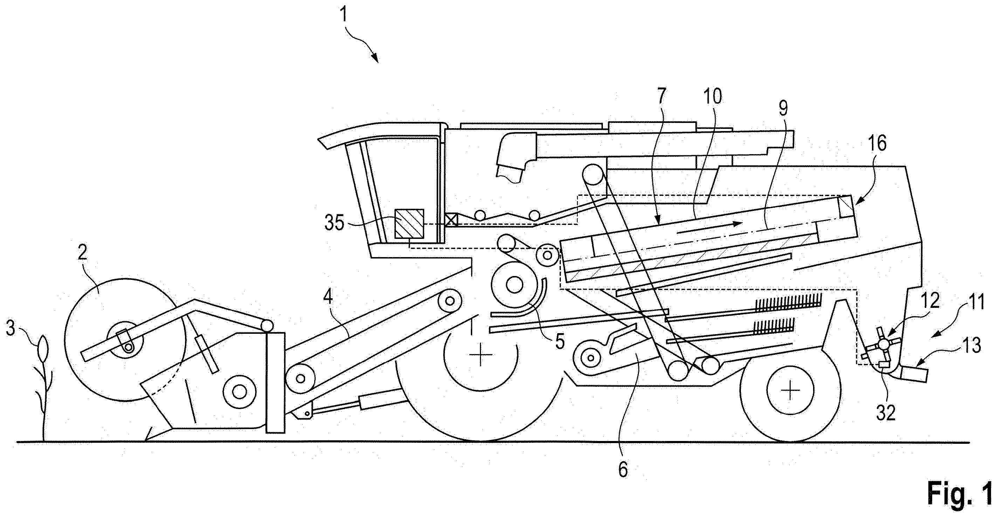

Fig. 1 zeigt einen Mähdrescher 1 in einer schematischen, teilweise geschnittenen Seitenansicht. Der Mähdrescher 1 trägt einen austauschbaren Erntevorsatz 2 zum Schneiden und Aufnehmen von Erntegut 3 von einem Feld. Ein Schrägförderer 4 führt das Erntegut einem Dreschwerk 5 zu. Das Dreschwerk 5 umfasst hier einen um eine in Querrichtung des Mähdreschers 1 orientierte Achse drehbaren Dreschrotor und einen den Dreschrotor umgebenden Dreschkorb. Aus dem Erntegutstrom ausgedroschene Körner gelangen durch Öffnungen des Dreschkorbs in eine Reinigungsstufe 6 und von dort in einen Korntank. Der restliche, noch Körner enthaltende Erntegutstrom wird vom Dreschwerk 5 weiter gefördert zu einem Abscheider 7. Der Abscheider 7 umfasst einen Trennrotor 8, der um eine im Wesentlichen in Längsrichtung des Mähdreschers 1 orientierte Achse 9 drehbar ist, und einen den Trennrotor 8 umgebendes zylindrisches Gehäuse 10. Das Gehäuse 10 ist in seinem unteren Bereich durchbrochen, um abgetrennte Körner an die Reinigungsstufe 6 abzugeben. Ein von Körnern weitgehend befreiter Restgutstrom wird am hinteren Ende des Abscheiders 7 in einen Verteiler 11 ausgeworfen. Der Verteiler 11 umfasst ein Häckselwerk 12 und eine dem Häckselwerk 12 nachgeordnete Auswurfeinrichtung 13 zum Auffächern des gehäckselten Restgutstroms quer zur Fahrtrichtung. Die Auswurfeinrichtung 13 kann von beliebiger bekannter Bauart sein, vorzugsweise umfasst sie eine Anordnung von entgegen der Fahrtrichtung des Mähdreschers 1 divergierenden Leitblechen.

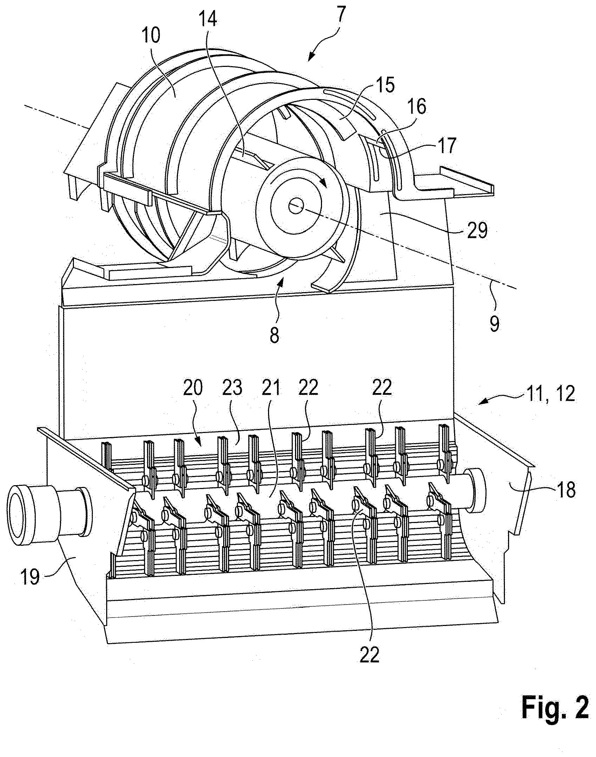

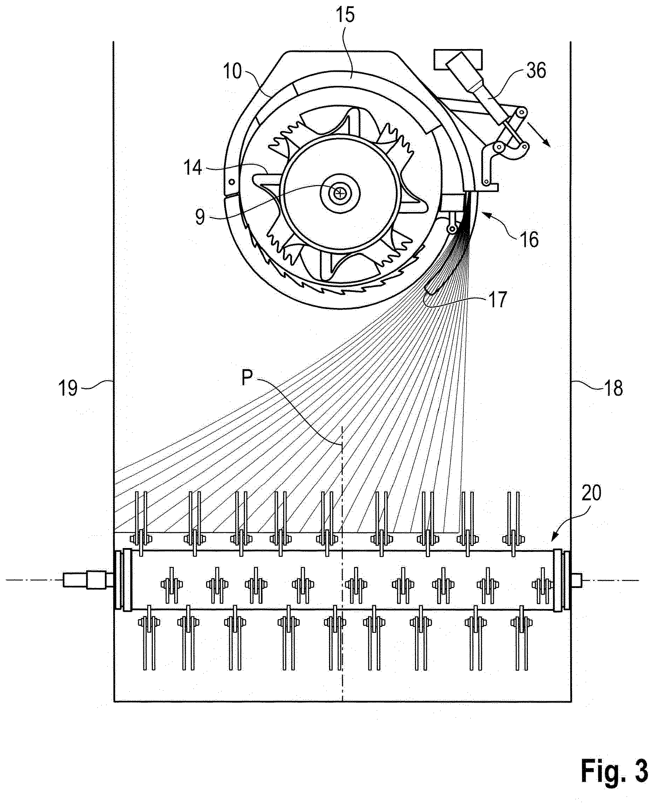

Fig. 2 und 3 zeigen einen Übergangsbereich zwischen dem Abscheider 7 und dem Verteiler 11. In Richtung der Achse 9 langgestreckte Rippen 14 und schraubenlinienförmige Rippen 15 des Trennrotors 8 und des Gehäuses 10 wirken zusammen, um den Erntegutstrom auf einem schraubenlinienförmigen Weg entlang der Achse 9 zu fördern. Die Drehung des Trennrotors 8 im Uhrzeigersinn bewirkt, dass der Restgutstrom den Abscheider 7 überwiegend links von der Achse 4 und mit einem nach unten gerichteten Impuls verlässt. Die mittlere Richtung des Restgutstroms ist bestimmt durch ein Gutleitelement 16, das am rückwärtigen Ende des Abscheiders 7 in Umfangsrichtung des Gehäuses 10 verstellbar ist. Fig. 2 zeigt das Gutleitelement 16 in einer maximal zurückgezogenen Stellung, in der es nahezu vollständig mit einem unbeweglichen oberen Teil des Gehäuses 10 überlappt und eine Unterkante 17 des Gutleitelements 16 sich relative zur Achse 9 in einer 1-Uhr- bis 2-Uhr-Stellung befindet. In dieser Stellung verlässt ein Teil des austretenden Restguts den Abscheider 7 mit einer nach rechts gerichteten Impulskomponente und kann so eine rechte Stirnwand 18 des Häckselwerks 12 erreichen, aber der Anteil der des Restguts, der bis zu einer gegenüberliegenden linken Stirnwand 19 fliegt, ist vernachlässigbar. Je weiter das Gutleitelement 16 nach unten vorgeschoben wird, umso weiter wird der Restgutstrom nach links abgelenkt.

Zwischen den Stirnwänden 18, 19 ist ein Häckslerrotor 20 gelagert. Der Häckslerrotor 20 weist in an sich bekannter Weise eine Welle 21 und zahlreiche schwenkbar an der Welle 21 befestigte Messer 22 auf, die zusammen mit gehäusefesten Gegenmessern das zugeführte Restgut zerkleinern.

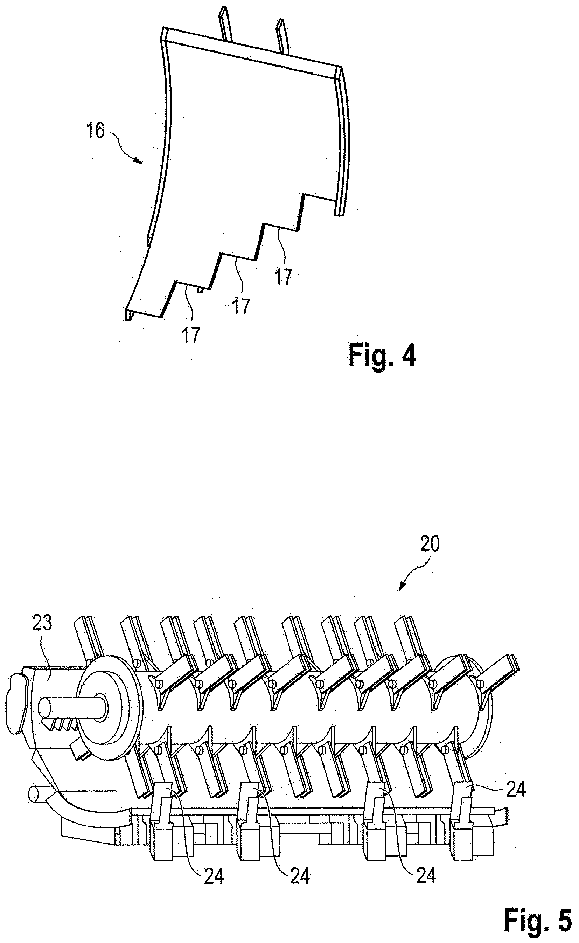

Während in Fig. 2 die Unterkante 17 des Gutleitelements 16 gerade und parallel zur Achse 4 verläuft, kann alternativ auch ein gestufter Verlauf wie in Fig. 4 gezeigt oder ein schräger Verlauf der Unterkante 17 vorgesehen sein. Indem so die Länge des Weges, auf dem das Gutleitelement 16 das Restgut in Umfangsrichtung um die Achse 9 führt entlang der Achse 9 variabel ist, kann eine stärkere Auffächerung des Restguts über die Breite des Verteilers 11 erreicht werden.

Fig. 5 zeigt den Häckslerrotor 20 ohne die Stirnwände 18, 19, an denen er gelagert ist, sowie eine Wand 23, die sich um einen Teil des Umfangs des Häckslerrotors 20 erstreckt und die Stirnwände 18, 19 miteinander verbindet. An einer in Bezug auf die Drehrichtung des Häckslerrotors 20 stromabwärtigen Kante der Wand 23 sind mehrere durch den Strom des gehäckselten Restguts auslenkbare Elemente 24 angebracht. Wie nachfolgend beschrieben, wirkt jedes auslenkbare Element 24 mit einem Drehwinkelsensor 32 zusammen, um einen Massenstromsensor zu bilden, dessen Ausgangssignal ein Maß für die Stärke des Restgutstroms am Ort des auslenkbaren Elements 24 liefert.

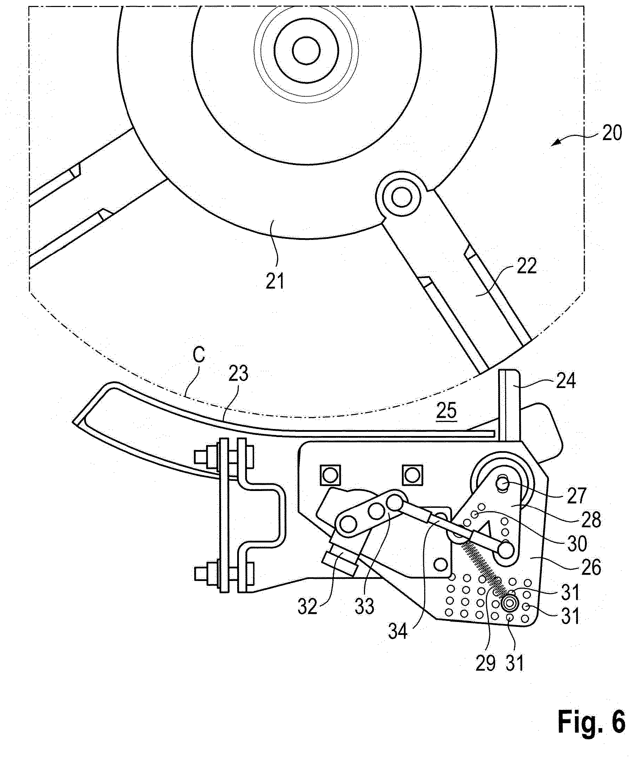

Wie in Fig. 6 zu sehen, verläuft ein stromaufwärtiger Teil der Wand 23 konzentrisch zur Welle 21 des Häckslerrotors 20 und in geringen Abstand von einem Kreis C, auf dem die Spitzen der Messer 22 umlaufen. Ein stromabwärtiger Teil der Wand 23 begrenzt zusammen mit dem Kreis C einen sich in Flussrichtung des Restgutstroms erweiternden Zwickel 25. Die Elemente 24 ragen von der Wand 23 aus in den Zwickel 25 hinein, ohne den Kreis C zu erreichen.

An der Außenseite der Wand 23 ist eine sich senkrecht zur Achse des Häckslerrotors 20 erstreckende Trägerplatte 26 montiert. Die Trägerplatte 26 lagert eine zur Achse des Häckslerrotors 20 parallele Welle 27, die das auslenkbare Element 24 und einen Hebel 28 trägt. Eine Rückstellfeder 29 greift an der Trägerplatte 26 und an einem Arm des Hebels 28 an, um auf das auslenkbare Element 24 ein Drehmoment entgegengesetzt zu demjenigen auszuüben, dem es durch den Restgutstrom ausgesetzt ist. Die Auslenkung des Elements 24 nimmt infolgedessen mit der Stärke des Restgutstroms am Ort des Elements 24 kontinuierlich zu.

Der Zusammenhang zwischen der Stärke des Restgutstroms und der Auslenkung ist durch Wahl von Angriffspunkten der Rückstellfeder 29 an der Trägerplatte 26 und an dem Hebel 28 veränderbar. Der Hebel 28 hat mehrere Angriffspunkte 30, z.B. in Form von Löchern, in unterschiedlichen Entfernungen von der Welle 21, an denen die Rückstellfeder 29 wahlweise befestigbar ist, um bei gegebener Kraft der Rückstellfeder 29 unterschiedliche Rückstellmomente auf das Element 24 auszuüben. An der Trägerplatte bilden Angriffspunkte 31 eine zweidimensionale Matrix. Durch Auswahl eines von mehreren auf einer Längsachse der Rückstellfeder 29 liegenden Angriffspunkten kann die Rückstellkraft in jeder Stellung des Elements 24 um einen konstanten Betrag verändert werden. Wird der Angriffspunkt der Feder an der Trägerplatte quer zur Längsrichtung der Feder 29 verändert, so beeinflusst dies in erster Linie die Schnelligkeit, mit der das auf die Welle 21 wirkende Rückstellmoment als Funktion ihres Drehwinkels zunimmt.

Der Hebel 28 ist über ein Getriebe an den Drehwinkelsensor 32 gekoppelt. Das Getriebe ist hier durch einen an einer Welle des Drehwinkelsensors 32 festen Hebelarm 33 und einen den Hebelarm 33 und mit dem Hebel 28 verbindenden Lenker 34 gebildet. Der Lenker ist vorzugsweise gedämpft elastisch, um als ein Tiefpassfilter zu wirken, der den Drehwinkelsensor 32 von schnellen Schwenkbewegungen des Elements 24 abschirmt. Als Drehwinkelsensor 32 kommt beispielsweise ein Potentiometer in Betracht.

Das Ausgangssignal des Drehwinkelsensors 32 lässt zwar einen Rückschluss auf die Stärke des Restgutstroms am Ort des auslenkbaren Elements 24 zu, allerdings ist dieser Zusammenhang nicht linear, zum einen weil das Moment der Rückstellfeder 29 keine lineare Funktion des Drehwinkels der Welle 27, zum anderen wächst das Drehmoment, das der Restgutstrom auf das Element 24 ausübt, mit zunehmender Stärke des Restgutstroms immer langsamer an, da das Element 24 mit zunehmender Auslenkung aus seiner Ruhestellung immer weniger weit in den Restgutstrom eingreift.

Eine Steuereinheit 35 (s. Fig. 1) ist mit den Drehwinkelsensoren 32 verbunden, um deren Ausgangssignale zu empfangen. Anhand einer gespeicherten, z.B. vorab an einem Prototypen empirisch ermittelten Kalibrierfunktion rechnet die Steuereinheit 35 die Ausgangssignale in zum Massenstrom am Ort der auslenkbaren Elemente 24 proportionale Massensignale um.

Die Steuereinheit 35 teilt die auslenkbaren Elemente 24 bzw. Massenstromsensoren in zwei Gruppen ein. Im hier gezeigten Fall einer spiegelsymmetrischen Anordnung der auslenkbaren Elemente 24 kann die erste Gruppe von Elementen 24 bzw. Massenstromsensoren auf einer ersten Seite der zur Drehachse des Häckslerrotors 20 senkrechten Symmetrieebene P (s. Fig. 3) sein; die zweite Gruppe umfasst die Elemente 24 bzw. Massenstromsensoren auf der entgegengesetzten Seite der Symmetrieebene P.

Die Steuereinheit 35 addiert die Massensignale, die auf die Massenstromsensoren einer gleichen Gruppe zurückgehen, um so einen Schätzwert für den Teil des Restgutstroms zu erhalten, der den Verteiler 10 rechts bzw. links von der Symmetrieebene P durchläuft, und steuert auf der Grundlage eines Vergleichs der beiden Schätzwerte einen Aktuator 36 (s. Fig. 3) des Gutleitelements 16 an. Ist der Schätzwert für den linken Teil größer als für den rechten, dann spricht die Steuereinheit 35 den Aktuator 36 an, um das Gutleitelement 16 ein Stück weit entgegen der Drehrichtung des Trennrotors zurückzuziehen und so mehr Restgut in den rechten Teil des Verteilers 10 zu lenken; im umgekehrten Fall wird das Gutleitelement 16 ein Stück weit in Drehrichtung ausgefahren, um das Restgut weiter nach links zu lenken.

Einer Variante zufolge legt die Steuereinheit 35 als Ergebnis des Vergleichs zwischen den zwei Schätzwerten nicht die Sollstellung des Aktuators 36 an sich fest, sondern lediglich eine mittlere Sollstellung, um die der Aktuator 36 oszilliert. Die fortwährende Oszillation ermöglicht es, das Restgut im Verteiler 10 breiter zu verteilen, als dies mit ruhenden Gutleitelement 16 möglich wäre, und es insbesondere über die gesamte Breite des Häckslerrotors 20 zu verteilen; durch eine Anpassung der mittleren Sollstellung können Störeinflüsse wie etwa eine Schrägstellung des Mähdreschers beim Fahren am Hang ausgeglichen werden.

Die Grenze P zwischen den Gruppen von Sensoren muss nicht durch die Mitte des Verteilers 10 verlaufen. Grundsätzlich könnte man im hier gezeigten Fall die Grenze auch so legen, dass die Gruppe auf einer Seite der Grenze nur einen Sensor und die Gruppe auf der anderen alle übrigen Sensoren enthält.

### Bezugszeichen

- 1: Mähdrescher
- 2: Erntevorsatz
- 3: Erntegut
- 4: Schrägförderer
- 5: Dreschwerk
- 6: Reinigungsstufe
- 7: Abscheider
- 8: Trennrotor
- 9: Achse
- 10: Gehäuse
- 11: Verteiler
- 12: Häckselwerk
- 13: Auswurfeinrichtung
- 14: Rippe
- 15: Rippe
- 16: Gutleitelement
- 17: Unterkante
- 18: Stirnwand
- 19: Stirnwand
- 20: Häckslerrotor
- 21: Welle
- 22: Messer
- 23: Wand
- 24: auslenkbares Element
- 25: Zwickel
- 26: Trägerplatte
- 27: Welle
- 28: Hebel
- 29: Rückstellfeder
- 30: Angriffspunkt
- 31: Angriffspunkt
- 32: Drehwinkelsensor
- 33: Hebelarm
- 34: Lenker
- 35: Steuereinheit
- 36: Aktuator
- C: Kreis
- P: Symmetrieebene

## Patentansprüche

1. Mähdrescher (1) mit
einem Abscheider (7) zum Scheiden eines Erntegutstroms in einen Gutanteil und einen Restgutstrom,
einem in einer Breitenrichtung ausgedehnten Verteiler (10) zum Auswerfen des Restgutstroms aus dem Mähdrescher (1), wobei eine quer zur Breitenrichtung verlaufende Grenze (P) einen ersten Bereich des Verteilers (10), der von einem ersten Teil des Restgutstroms durchlaufen wird, und einen zweiten Bereich des Verteilers (11) definiert, der von einem zweiten Teil des Restgutstroms durchlaufen wird
einem an einem Auslass des Abscheiders (7) angeordneten Gutleitelement (16), das zwischen Stellungen, die jeweils unterschiedliche Verteilungen des in den Verteiler (10) eintretenden Restgutstroms in der Breitenrichtung bewirken, verstellbar ist,
in der Breitenrichtung verteilt angeordneten Sensoren (32), von denen jeder zum Erfassen der Stärke eines in der Nachbarschaft des Sensors (32) passierenden Anteils des Restgutstroms und zum Liefern eines für die Stärke des Anteils repräsentativen Ausgangssignals ausgelegt ist, wobei eine erste Gruppe der Sensoren (32) im ersten Bereich des Verteilers (11) und eine zweite Gruppe der Sensoren im zweiten Bereich angeordnet ist und wenigstens die erste Gruppe mehrere Sensoren (32) umfasst,
und einer Steuereinheit (35) zum Steuern der Stellung des Gutleitelements (16),
wobei die Steuereinheit (35) eingerichtet ist zum Erzeugen eines zur Stärke des Anteils des Restgutstroms proportionalen Signals aus jedem Ausgangssignal eines Sensors (32), zum Addieren der proportionalen Signale der Sensoren (32) wenigstens der ersten Gruppe, um zur Stärke des ersten und des zweiten Teils des Restgutstroms proportionale Signale zu erhalten, zum Vergleichen des Verhältnisses der zum ersten und zweiten Teil proportionalen Signale mit einem Sollverhältnis und zum Verstellen des Gutleitelements (16) im Falle einer Abweichung zwischen dem Verhältnis der zum ersten und zweiten Teil proportionalen Signale und dem Sollverhältnis.

2. Mähdrescher nach Anspruch 1, **dadurch gekennzeichnet, dass** jeder Sensor (32) an ein in den Weg des Restgutstroms eingreifendes auslenkbares Element (24) gekoppelt ist und dass das Ausgangssignal des Sensors (32) repräsentativ für eine Auslenkung des Elements (24) ist.

3. Mähdrescher nach Anspruch 2, **dadurch gekennzeichnet, dass** jedem Sensor (32) eine Rückstellfeder (29) zum Beaufschlagen des auslenkbaren Elements (24) in eine in den Restgutstrom eingreifende Ruhestellung zugeordnet ist.

4. Mähdrescher nach 3, **dadurch gekennzeichnet, dass** von
- der Länge eines Hebelarms (28), über den die Rückstellfeder (29) an das auslenkbare Element (24) gekoppelt ist,
- der Position eines festen Endes der Rückstellfeder (29), und
- der Übersetzung eines das auslenkbare Element (24) mit dem Sensor (32) koppelnden Getriebes (33, 34) wenigstens eines verstellbar ist.

5. Mähdrescher nach einem der Ansprüche 2 bis 4, **dadurch gekennzeichnet, dass** das auslenkbare Element (24) mit dem Sensor (32) über ein schwingungsdämpfendes Element (34) verbunden ist.

6. Mähdrescher nach einem der Ansprüche 2 bis 5, **dadurch gekennzeichnet, dass** der Abstand zwischen zwei auslenkbaren Elementen (24) ein Mehrfaches ihrer Breite beträgt.

7. Mähdrescher nach einem der vorhergehenden Ansprüche,
**dadurch gekennzeichnet, dass** die Sensoren (32) in einer Bodenplatte des Verteilers (11) angeordnet sind.

8. Mähdrescher nach einem der vorhergehenden Ansprüche,
**dadurch gekennzeichnet, dass** der Verteiler (11) ein Häckselwerk (12) umfasst.

9. Mähdrescher nach Anspruch 8, **dadurch gekennzeichnet, dass** die Sensoren (32) an einem Gehäuseabschnitt des Häckselwerks (12) angeordnet sind, der zusammen mit einem Häckslerrotor (20) einen auslassseitigen Zwickel (25) des Häckselwerks (12) definiert.

10. Mähdrescher nach einem der vorhergehenden Ansprüche,
**dadurch gekennzeichnet, dass** die Anzahl der Sensoren (32) gerade ist.

11. Mähdrescher nach einem der vorhergehenden Ansprüche,
**dadurch gekennzeichnet, dass** die Sensoren (32) der ersten Gruppe bezüglich der Grenze (P) spiegelbildlich zu den Sensoren (32) der zweiten Gruppe angeordnet sind.

## Claims

1. A combine harvester (1) with
a separator (7) for separating a flow of harvested material into a material fraction and a residual material flow,
a spreader (10) extending in a width direction for ejecting the residual material flow from the combine harvester (1),
wherein a dividing line (P) running transverse to the width direction defines a first region of the spreader (10) through which a first portion of the residual material flow is passed, and a second region of the spreader (11) through which a second portion of the residual material flow is passed,
a material guiding element (16) disposed at an outlet from the separator (7) and which can be adjusted between positions which respectively bring about different distributions in the width direction of the residual material flow entering the spreader (10),
sensors (32) distributed in the width direction, each of which being configured to detect the size of a fraction of the residual material flow passing in the vicinity of the sensor (32) and for delivering an output signal which is representative of the size of the fraction, wherein a first group of the sensors (32) is disposed in the first region of the spreader (11) and a second group of the sensors is disposed in the second region and at least the first group comprises a plurality of sensors (32),
and a control unit (35) for controlling the position of the material guiding element (16),
wherein the control unit (35) is configured to generate a signal which is proportional to the size of the fraction of the residual material flow from each output signal from a sensor (32), for adding the proportional signals from the sensors (32) of at least the first group in order to obtain signals which are proportional to the size of the first and of the second portions of the residual material flow, for comparing the ratio of the signals which are proportional to the first and second portion with a nominal ratio and for adjusting the material guiding element (16) in the event of a discrepancy between the ratio of the signals which are proportional to the first and second portion and the nominal ratio.

2. The combine harvester according to claim 1, **characterized in that** each sensor (32) is coupled to a deflectable element (24) encroaching into the path of the residual material flow and **in that** the output signal from the sensor (32) is representative of a deflection of the element (24).

3. The combine harvester according to claim 2, **characterized in that** a return spring (29) for urging the deflectable element (24) into a rest position encroaching into the residual material flow is associated with each sensor (32).

4. The combine harvester according to claim 3, **characterized in that** at least one of the following is adjustable:
- the length of a crank arm (28) via which the return spring (29) is coupled to the deflectable element (24),
- the position of a fixed end of the return spring (29), and
- the multiplication of a linkage (33, 34) coupling the deflectable element (24) to the sensor (32).

5. The combine harvester according to one of claims 2 to 4,
**characterized in that** the deflectable element (24) is connected to the sensor (32) via a vibration-absorbing element (34).

6. The combine harvester according to one of claims 2 to 5,
**characterized in that** the distance between two deflectable elements (24) is a multiple of its width.

7. The combine harvester according to one of the preceding claims, **characterized in that** the sensors (32) are disposed in a bottom plate of the spreader (11).

8. The combine harvester according to one of the preceding claims, **characterized in that** the spreader (11) comprises a chopping assembly (12).

9. The combine harvester according to claim 8, **characterized in that** the sensors (32) are disposed on a housing section of the chopping assembly (12) which, together with a chopping rotor (20), defines an output-side gap (25) of the chopping assembly (12).

10. The combine harvester according to one of the preceding claims, **characterized in that** the number of sensors (32) is an even number.

11. The combine harvester according to one of the preceding claims, **characterized in that** the sensors (32) of the first group and the sensors (32) of the second group are disposed in a mirror-imaged manner with respect to the dividing line (P).

## Revendications

1. Moissonneuse-batteuse (1), comprenant
un séparateur (7) destiné à séparer un flux de récolte en une part de produit et un flux de produit résiduel,
un éparpilleur (10) s'étendant dans un sens de largeur et destiné à éjecter le flux de produit résiduel de la moissonneuse-batteuse (1), dans lequel une limite (P) s'étendant transversalement au sens de la largeur définit une première zone de l'éparpilleur (10), qui est traversée par une première partie du flux de produit résiduel, et une deuxième zone de l'éparpilleur (11) qui est traversée par une deuxième partie du flux de produit résiduel,
un élément de guidage de produit (16) qui est disposé à une sortie du séparateur (7) et peut être déplacé entre des positions provoquant respectivement des répartitions différentes, dans le sens de la largeur, du flux de produit résiduel entrant dans l'éparpilleur (10),
des capteurs (32) qui sont disposés en étant répartis dans le sens de la largeur et dont chacun est conçu pour mesurer l'intensité d'une part du flux de produit résiduel passant à proximité du capteur (32), et pour délivrer un signal de sortie représentatif de l'intensité de ladite part, sachant qu'un premier groupe des capteurs (32) est disposé dans la première zone de l'éparpilleur (10) et un deuxième groupe des capteurs est disposé dans la deuxième zone et qu'au moins le premier groupe comprend plusieurs capteurs (32),
et une unité de commande (35) destinée à commander la position de l'élément de guidage de produit (16),
sachant que l'unité de commande (35) est conçue pour générer, à partir de chaque signal de sortie d'un capteur (32), un signal qui est proportionnel à l'intensité de la part de flux de produit résiduel, pour additionner les signaux proportionnels des capteurs (32) au moins du premier groupe, pour obtenir des signaux proportionnels à la première et à la deuxième partie du flux de produit résiduel, pour comparer le rapport des signaux proportionnels à la première et à la deuxième partie avec un rapport de consigne, et pour déplacer l'élément de guidage de produit (16) en cas d'écart entre le rapport des signaux proportionnels à la première et la deuxième part et le rapport de consigne.

2. Moissonneuse-batteuse selon la revendication 1, **caractérisée en ce que** chaque capteur (32) est couplé à un élément (24) pouvant être dévié et s'engageant dans le parcours du flux de produit résiduel, et **en ce que** le signal de sortie du capteur (32) est représentatif d'une déviation de l'élément (24).

3. Moissonneuse-batteuse selon la revendication 2, **caractérisée en ce qu'**est associé à chaque capteur (32), un ressort de rappel (29) destiné à solliciter l'élément (24) pouvant être dévié, vers une position de repos s'engageant dans le flux de produit résiduel.

4. Moissonneuse-batteuse selon la revendication 3, **caractérisée en ce que** parmi
- la longueur d'un bras de levier (28), par le biais duquel le ressort de rappel (29) est couplé à l'élément (24) pouvant être dévié,
- la position d'une extrémité fixe du ressort de rappel (29), et
- le rapport de transmission d'un mécanisme de transmission (33, 34) couplant l'élément (24), pouvant être dévié, au capteur (32),
au moins un peut être modifié.

5. Moissonneuse-batteuse selon une des revendications 2 à 4, **caractérisée en ce que** l'élément (24) pouvant être dévié est relié au capteur (32) par l'intermédiaire d'un élément (34) amortisseur de vibrations.

6. Moissonneuse-batteuse selon une des revendications 2 à 5, **caractérisée en ce que** la distance entre deux éléments (24) pouvant être déviés correspond à un multiple de leur largeur.

7. Moissonneuse-batteuse selon une des revendications précédentes, **caractérisée en ce que** les capteurs (32) sont disposés dans une plaque de plancher de l'éparpilleur (10).

8. Moissonneuse-batteuse selon une des revendications précédentes, **caractérisée en ce que** l'éparpilleur (10) comprend un dispositif de hachage (12).

9. Moissonneuse-batteuse selon la revendication 8, **caractérisée en ce que** les capteurs (32) sont disposés sur une partie de boîtier du dispositif de hachage (12) qui définit avec un rotor de hachage (20) un coin (25) côté sortie.

10. Moissonneuse-batteuse selon une des revendications précédentes, **caractérisée en ce que** le nombre des capteurs (32) est pair.

11. Moissonneuse-batteuse selon une des revendications précédentes, **caractérisée en ce que** les capteurs (32) du premier groupe sont disposés de manière symétrique aux capteurs (32) du deuxième groupe, par rapport à la limite (P).
